# EUROPEAN PATENT SPECIFICATION

(11) **EP 0 584 354 B1**
(45) Date of publication and mention of the grant of the patent: **17.06.1998**
(21) Application number: 93920573.8
(22) Date of filing: 15.03.1993
(51) Int. Cl.: C08L 83/04, C08K 5/14

(54) **CLEAR HEAT CURABLE SILICONE RUBBER COMPOSITIONS WITH RESIN FOR MATCHING REFRACTIVE INDEX**
OPTISCH KLARE HITZEHÄRTBARE KAUTSCHUKZUSAMMENSETZUNGEN DIE EIN BRECHUNGSINDEX-REGULIERENDES HARZ ENTHALTEN
COMPOSITIONS DE CAOUTCHOUC SILICONE THERMODURCISSABLES CLAIRES RENFERMANT UNE RESINE ASSURANT LA CORRESPONDANCE AVEC UN INDICE DE REFRACTION

(30) Priority: 17.03.1992 US 842281
(43) Date of publication of application: 02.03.1994
(73) Proprietor: GENERAL ELECTRIC COMPANY, Schenectady, NY 12345 (US)
(72) Inventor: SLOCUM, Gregory, Howard, Niskayuna, NY 12309 (US)
(74) Representative: Szary, Anne Catherine, Dr.
(86) International application number: US9302302
(87) International publication number: WO9319122

(56) References cited:
- EP-A- 0 305 032
- EP-A- 0 358 370
- EP-A- 0 415 180
- EP-A- 0 477 681
- US-A- 3 436 366
- US-A- 3 457 214

## Description

### BACKGROUND OF THE INVENTION

The present invention relates to heat curable silicone rubber compositions. More particularly, the invention relates to heat curable silicone rubber compositions having improved clarity while maintaining desirable tear strength, oil resistance and compression set properties.

Clear, heat curable silicone rubber compositions are known in the art. One such known composition comprises a mixture of one or more polymers, a high surface area filler of limited particle size and an index matching phenyl containing gum. Blends comprising polydiorganosiloxane gum having 5.3 mole percent phenyl substituents, and a silica filler have been reported to provide substantially clear rubber compounds exhibiting an 83.7 percent transmission, a yellowing index of 4.9, and a haze of 17.1 percent. However, phenyl based compositions are undesirable because they are costly to produce and may release harmful by-products over time. In particular applications, such as medical tubing and devices, nonphenyl based materials are needed which not only have good physical properties but also have a high degree of clarity and low haze.

Additional properties which are of importance in a clear silicone rubber composition are those which are associated with strength. In particular, tear strength, tensile strength, elongation, compression set and hardness are physical properties of interest. Tear strength, measured in kg/m (pounds per inch (pi)), is the ability of the material to withstand continual abrasion without breakdown in mechanical structure. Good tear strength is desirable because it is a measure of toughness. In addition to toughness, elastomeric materials for most applications should have high tensile strength, measured in kPa (pounds per square inch (psi)). The tensile strength of a material is related to its ability to resist damaging tensile or pulling forces. At the same time, such materials require good elongation, which is the ability of the material to stretch without breaking. Elongation is measured as a percent of the original sample size. For some applications, hardness, measured on a shore A scale, is an important physical property. Other properties such as resiliency or the ability to recover shape after deformation, especially by compressive forces, may be desirable in a clear rubber product.

Efforts have been undertaken in the past to produce heat curable silicone elastomer compositions having good physical properties. Such efforts are discussed herein by reference to patents set forth below.

U.S. Patent No. 4,539,357 (Bobear) discloses a heat curable silicone composition containing blends of high viscosity, vinyl terminated diorganopolysiloxane gums with a hydride-containing polysiloxane and peroxide curing agent. Although the composition may further comprise a vinyl containing organopolysiloxane resin copolymer of up to about 50 weight percent, Bobear '357 is primarily concerned with tear strength. Clarity of the resulting product is not evaluated among the properties of interest. Similarly, U.S. Patents Nos. 3,652,475 and 3,671,480 to Wada et al. disclose heat curable elastomeric materials. However, clarity is not evaluated among the properties of interest.

U.S. Patent No. 4,061,609 to Bobear discloses a platinum catalyzed silicone rubber composition having a hydride resin component. In the examples, tear strength is evaluated but clarity is not. U.S. Patent No. 3,660,345 to Bobear shows a further example of an organopolysiloxane elastomer.

U.S. Patents Nos. 3,696,068 to Creamer and 3,884,866 to Jeram et al. also disclose heat curable compositions but clarity is not discussed.

U.S. Patent No. 4,891,393 to Hirai et al. discloses a thermal setting organopolysiloxane composition made from a gum with reinforcing silica and small percentages of methoxy groups, organohydrogenpolysiloxane and a curing catalyst. The materials exhibit improved adhesion to a variety of substrates including metals, glasses and plastics. Some examples listed in Table 4 appear to be transparent.

U.S. Patent No. 4,746,699 to Modic discloses a curable silicone coating composition containing resinous organopolysiloxane components. The materials, which are compounded free of finely divided inorganic fillers, are reported as being transparent whereas compositions containing such fillers are translucent, or opaque depending upon the filler employed.

U.S. Patent No. 4,041,101 to Jeram discloses a solvent resistant silicone rubber composition having a blend of vinyl containing polymers and resins, and a hydride containing resin or hydrogen containing polysiloxane cross-linking agent. A filler may also be present. Clarity does not appear to be discussed. EP-A-0358370 discloses that the presence of up to 40 percent by weight of a resinous organosiloxane copolymer consisting of trimethylsiloxy, dimethylvinylsiloxy and SiO₂ units in a diorganovinylsiloxyterminated polydiorganosiloxane containing at least 95 mol percent of dimethylsiloxane units and having a viscosity greater than 12 Pa.s at 25°C., decreases the viscosity of the mixture relative to the viscosity of the polydiorganosiloxane. Elastomers obtained by curing these mixtures using an organohydrogensiloxane in the presence of a platinum-containing hydrosilation catalyst are transparent and particularly suitable for fabrication or incorporation into optical devices such a as windows, windshields and lenses.

### SUMMARY OF THE INVENTION

The present invention is based upon the discovery that a relatively small amount of an MQ resin acts as a compatibilizer between components predominantly containing D and Q units, respectively. In one embodiment, a vinyl containing organopolysiloxane gum and a silica filler are combined with an MQ or MDQ resin or blends thereof to produce a clear silicone rubber which is heat curable in the presence of an organo-peroxide catalyst.

The present invention provides clear, heat curable silicone rubber compositions having good strength properties. The compositions consist of :
(A) about 100 parts by weight of a vinyl containing organopolysiloxane having a viscosity of 3,000,000 to 100,000,000 mPa.s (centipoise (cps)) at 25°C;
(B) 1 to 30 parts by weight of organopolysiloxane resin copolymers having MQ or MDQ units where each M unit can represent M or M' e.g., M-vinyl, units and where each D can represent D or D' e.g., D-vinyl units, and up to about 10 weight percent vinyl groups based upon Component (A) comprising:
   1) R₃SiO_{1/2} units (M or M' units) and SiO₂ units (Q units) where each R is independently selected from the group consisting of vinyl radicals and monovalent hydrocarbon radicals free of aliphatic unsaturation, with a ratio of M units to Q units ranging from 0.5:1 to 1.5:1, wherein the copolymer contains from about 0.5 to 10 weight percent vinyl groups, or
   2) R₃Sio_{1/2} units (M or M' units), SiO₂ units (Q units) and R₂SiO_{2/2} units (D or D' units) where each R is as defined above and where the ratio of M units to Q units is from 0.5:1 to 1.5:1, and the D
      units are present in the amount from 1 to 70 mol percent based upon the total number of mols of siloxy units in the copolymer, and where the resinous copolymer contains from 0.5 to 10.0 weight percent vinyl groups; or
   3) mixtures of units 1 and 2; and
(C) 5 to 200 parts by weight of a finely divided silica filler based upon Component (A);
(D) an organic peroxide free radical initiator or curing agent; and
   in order to improve processing or properties, the composition may contain one or more of the following:
(E) up to 20 parts by weight of a processing aid such as a low viscosity silanol stopped siloxane fluid of a 3 to 500 mPa.s (centipoise) at 25°C;
(F) up to 20 parts by weight of a divinyltetramethyl silazane fluid based upon 100 parts by weight of Component (C);
(G) up to 2.5 parts by weight of a cross linking agent such as a polydimethyl siloxane polymethyl hydrogen siloxane random copolymer of about 100 repeating units each of PDMS and PMHS units; and
(H) a polydiorganosiloxane fluid of 5,000 to 500,000 mPa.s (cps) at 25°C.

The filler may be treated prior to compounding with up to 20 percent by weight based upon Component (C) of a cyclic methyl tetramer.

The heat curable compositions of this invention have good clarity without sacrificing other beneficial physical properties such as tear strength, tensile strength, hardness, compression set elongation and oil resistance.

### BRIEF DESCRIPTION OF THE DRAWINGS

Fig. 1 is a plot illustrating the effect of resin content (Component (B)) on clarity in a clear, heat curable silicone rubber composition of the present invention;
Fig. 2 is a plot illustrating the interaction of the filler treatment and the cross-linking agent on clarity and haze;
Fig. 3 is a plot illustrating the interaction of the filler treatment and water on clarity and haze; and
Fig. 4 is a plot illustrating the interaction of the filler treatment and water on yellowing.

### DESCRIPTION OF THE INVENTION

The present invention is directed to a heat curable silicone composition having excellent clarity, good tear and tensile strengths as well as desirable hardness, compression set, elongation and oil resistance. The composition contains a vinyl containing diorgano siloxane gum or gums having a viscosity of about 3,000,000 to 100,000,000 mPa.s (cps) at 25°C; an organopolysiloxane resin or resins of the MQ or MDQ types (where each M unit can represent M or M' e.g., M-vinyl units, and where each D unit can represent D or D' e.g., D-vinyl units, and up to about 10 weight percent vinyl groups); and a finely divided silica filler. In accordance with the invention, the resin has a high Q content having sufficient compatibility with the other components so as to provide an essentially one phase system with the gum and filler. Compatibility is defined as a condition where the interface between the components, especially the gum and filler becomes substantially invisible.

Component (A) is a vinyl containing diorgano siloxane gum or blend of such gums having a viscosity from 3,000,000 to 100,000,000 mPa.s (cps) at 25°C. Preferably, the gum has a viscosity of between 3,000,000 and 85,000,000 cps, more preferably, 20,000,000 to 50,000,000 mPa.s (cps) at 25°C. The gum may have a weight percent vinyl concentration of from 5x10⁻⁵ to 1. The gum preferably has a weight percent vinyl concentration in the range from 6.5x10⁻⁵ to 0.03, more preferably from 8x10⁻⁵ to 1.5x10⁻⁴ and more preferably yet from 8x10⁻⁵ to 1.2x10⁻⁴. The organo groups in the vinyl polymer or polymers of the gum should all be monovalent hydrocarbon radicals.

The vinyl polymer or polymers of Component (A) may contain vinyl-on-chain groups and vinyl end-groups. Preferably, the polymer is vinyl terminated. More preferably, the polymer is free of vinyl substitution except at the chain ends. In other preferred embodiments, Component (A) has the formula:

ViSiOR¹ ₂ (SiOR¹ ₂)ₓ(SiOR² ₂)_{y} SiR¹ ₂Vi

wherein Vi is vinyl; R¹ is independently chosen from monovalent hydrocarbon radicals, free of aliphatic unsaturation, and containing 1 to 8 carbon atoms; R² is independently chosen from monovalent hydrocarbon radicals containing 1 to 8 carbon atoms; and x and y are integers chosen such that Component (A) has a viscosity which ranges from 3,000,000 to 85,000,000 mPa.s (cps) at 25°C and a weight percent vinyl concentration in the range from 5x10⁻⁵ to 2x10⁻⁴, preferably from 8x10⁻⁵ to 1.5x10⁻⁴ and more preferably from 8x10⁻⁵ to 1.2x10⁻⁴.

The vinyl containing polymers of Component (A) can be made by a process well known in the art, for example, by reacting cyclo-tetrasiloxanes in the presence of low molecular weight, linear vinyl chain stoppers at high temperatures in the presence of basic catalysts so as to yield a polymer of the desired molecular weight. When the reaction is over, the catalyst is neutralized and the excess cyclics are vented off to result in the desired polymer. By controlling the amount of chain stopper and the temperature of the reaction, the molecular weight of the desired vinyl-containing polymer end product can be controlled. For more details of the process by which such vinyl containing polymers are produced, reference is made, for example, to U.S. Patent No. 3,660,345.

In accordance with the invention, the amount of gum present in the final product may vary. However, for purposes of explanation herein, it is assumed that 100 parts by weight of the gum is combined with varying amounts of the other components. In some examples, the formulation has 80 parts of Component (A). In each case, the amount of other components in the final product may be calculated or otherwise readily inferred. In the examples below Component (A) is a vinyl-stopped polyorganosioxane gum about 9000 units in length.

Component (B) is (1) an organopolysiloxane resin copolymer in an appropriate solvent (e.g. xylene). The resin copolymer may contain R₃SiO_{1/2} monofunctional units (M units) and SiO₂ quadrifunctional units (Q units), where each R is independently selected from the group consisting of vinyl radicals and monovalent hydrocarbon radicals free of aliphatic unsaturation. The ratio of M units to Q units ranges from 0.5:1 to 1.5:1, wherein the resin contains 0.5 to 10.0 weight percent vinyl. Alternatively, Component (B) may comprise (2) an organopolysiloxane resin copolymer containing M and Q units as aforesaid and R₂SiO_{2/2} difunctional (D units) in an appropriate solvent where each R is independently selected from the group consisting of vinyl radicals and monovalent hydrocarbon radicals free of aliphatic unsaturation. Each M unit may represent M or M' e.g., M-vinyl units, and each D unit may represent D or D' e.g., D-vinyl units. The ratio of M units to Q units is from 0.5:1 to 1.5:1 and the D units are present in an amount of from 1 to 70 mol percent based upon the total number of mols of siloxy units in the copolymer. The resinous copolymer contains from 0.5 to 10.0 weight percent vinyl groups. The organopolysiloxane resin copolymer of Component (B) may contain mixtures of the MQ and the MDQ, resins.

The organopolysiloxane resin copolymers of Component (B) in the present composition and their manufacture are well known in the art. Such resins are usually produced by hydrolysis of chlorosilanes in a process described in U.S. Patent No. 3,436,366.

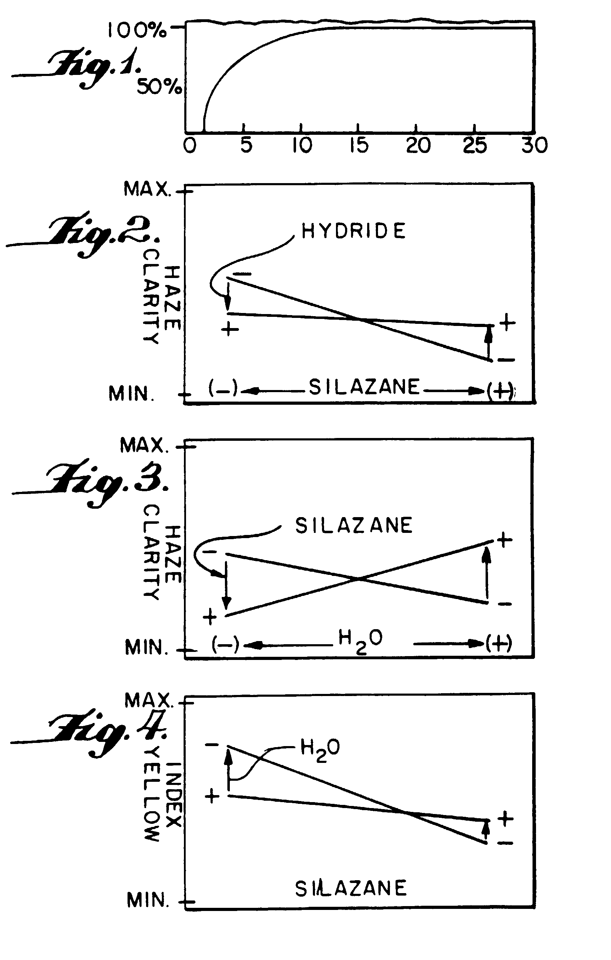

Component (B) is present in the composition of the present invention in an amount ranging from 1.0 to 30 and preferably from 1.0 to 7.5 parts by weight based upon Component (A). The amount of resin present in the composition, however, is most preferably governed by the amount of clarity desired in the final composition. It has been found that clarity increases greatly when the resin content is between 1 and 7.5 parts by weight relative to 100 parts by weight Component (A). This is best illustrated in Fig. 1 is a graph in which clarity is generally related to weight percent of Component (B) based on Component (A). It can be readily appreciated that the greatest increase in clarity occurs when Component (B) or resin content is between 1 and 7.5 parts by weight of Component (A). Thereafter, clarity increases marginally up to about 25 parts by weight whereupon additional resin concentrations apparently have little or no perceptible positive effect on the clarity.

Component (B') in the examples below comprises (B2) dispersed in xylene. Much of the xylene has been vacuum stripped so as to result in a composition comprising 60% by weight solids and 40% by weight xylene. The process for manufacturing the composition includes a cook and strip step to facilitate the removal of the residual xylene from the finished compound.

Component (C) comprises from 5 to 200, preferably from 10 to 100 and more preferably from 20 to 75 parts by weight of a finely divided silica filler based on Component (A). The filler is needed in the composition to provide a high tear strength and includes fumed silica and precipitated silica, with fumed silica being preferred. The filler may be treated with various agents so as to prevent the composition from structuring, for example cyclopolysiloxanes as disclosed in U.S. Patent No. 2,938,009 to Lucas and silazanes as disclosed in U.S. Patent No. 3,635,743 to Smith. The cyclopolysiloxanes present may be, for example, a cyclotetramethyl siloxane present in the amount of 15 to 20 weight percent of the filler. In the examples below Component (C) is fumed silica treated as in Lucas above having a surface area of 160 m²/gm to 240 m²/gm. A further surface treatment with a linear vinyl containing silazane may be provided in-situ.

In order to form a heat curable rubber, Component (D), in the form of an organic peroxide free radical initiator or a curing catalyst is provided. The preferred peroxide curing agents are thermal decomposition organic peroxides conveniently used to cure silicone elastomers. Examples of suitable organic peroxide free radical initiators for use in the present invention are disclosed, for example, in U.S. Patent No. 4,539,357 to Bobear. Suitable peroxide catalysts include dialkyl peroxide such as di-tertiary-butyl peroxide, tertiarybutyl-triethylmethyl peroxide, tertiary-butyl-tertiarybutyl-tertiary-triphenyl peroxide, t-butyl perbenzoate and a di-tertiary alkyl peroxide such as dicumyl peroxide. Under certain conditions hereinafter described, such as when a hydride is used, a platinum catalyst may be employed instead of an initiator. In the examples below, the preferred catalyst is a vinyl specific catalyst such as 2,5 dimethyl-2,5-di(t-butyl peroxy) hexane e.g., (Lupersol ™101).

Other components may also be employed as discussed hereinafter. For example, in order to allow for easier incorporation of the filler in the gum, Component (E), a processing aid or plasticizer is employed. In the preferred embodiment, Component (E) is a low viscosity silanol stopped siloxane fluid having a viscosity ranging from 3-500 mPa.s (cps) and preferably 3 to 50 cps at 25°C. The siloxane fluid is an equilibrium mix of low molecular weight oligomers of from 4 to 10 but preferably between 4 and 6 repeating units in length with a minimum amount of cyclics in equilibrium with the oligomers. The processing aid (E) may have the form:

HO(R₂SiO)ₓH

where each R is CH₃, and x is between 4 and 10, preferably between 4 and 6, with resulting cyclics of the same number of units in equilibrium.

In the present invention, the processing aid may be present in amounts up to 20 parts by weight based upon Component (A), and preferably is present in amounts between 2 and 10 parts by weight based upon Component (A) and more preferably 3 parts by weight. It should be understood that, typically, the more filler that is used the greater amount of processing aid is employed.

Another Component (F) may be vinyl stopped linear silazane such as divinyltetramethyl silazane. The material may be added for enhancing the bonding of filler to gum. In the present invention, the silazane acts as a filler treatment in-situ. Component (F) is preferably present in an amount up to 2 percent by weight, based upon the weight of Component (A). More preferably, Component (F) is present in an amount of only up to 0.3 parts by weight, based upon 100 parts by weight of Component (A).

In addition to the foregoing, Component (G) in the form of a hydride cross-linking agent may be employed. In the preferred embodiment, Component (G) may be a random copolymer formed of a polydimethylsiloxane (PDMS) and a polymethylhydrogensiloxane (PMHS) having the form:

R₃SiO(SiORHSiOR₂)ₓSiR₃

wherein each R is independently chosen from a hydrogen or monovalent hydrocarbon radical free of aliphatic unsaturation containing 1 to 8 carbon atoms, and x ranges from 2 to 100. In the present invention, the hydride is present in an amount of 0.1 to 10 parts by weight based upon Component (A), preferably 0.5 to 8 parts by weight and more preferably 0.8 to 5 parts by weight based upon Component (A). When a hydride agent is employed, a platinum catalyst may be substituted for the peroxide catalyst to cure the composition. In Component (G) x may vary so that (G) has a viscosity ranging from 5 to 500 mPa.s (cps), preferably from 10 to 100 mPa.s (cps) and more preferably from 10 to 50 mPa.s (cps) at 25°C. In the examples below, Component (G) has a viscosity of about 30 centistokes, a hydride content of about 0.8 percent by weight, and a chain length of about 100 units.

The linear hydride described above can be made by many procedures which are known in the art and particularly by the hydrolysis of appropriate chlorosilanes. See for example, U.S. Patent No. 4,041,101.

Component (H) may be present in an amount of up to 19 parts by weight based upon Component (A). Component (H) is a vinyl-containing diorganopolysiloxane or a vinyl-containing diorganopolysiloxane blend having a viscosity of from 5000 to 500,000, preferably from 40,000 to 500,000, and most preferably from 60,000 to 150,000, mPa.s (centipoise) at 25°C.

The vinyl polymer or polymers of Component (H) can be vinyl-terminated and can contain vinyl-on-chain units. In preferred embodiments, however, the vinyl polymer has no vinyl-on-chain units. Preferably, the vinyl polymer of Component (H) has the formula:

ViSiOR¹ ₂ (SiOR² ₂ )ₓ(SiOR² ₂ )_{y}SiR¹ ₂Vi

wherein Vi is vinyl, R¹ is selected from the class consisting of vinyl or alkyl radicals of 1 to 3 carbon atoms, and R² is an alkyl radical of 1 to 8 carbon atoms, x and y vary such that the viscosity of (H) ranges from 5,000 to 500,000 mPa.s (centipoise) at 25°C, the vinyl concentration being in the range of from 0.02 to 0.1 weight percent.

Examples of alkyl radicals which can be represented by R¹ and R² include methyl, ethyl, and vinyl radicals. Preferably, R¹ is either vinyl or methyl, and R² is methyl.

Copending patent application EP-A-0 477 681 discloses heat curable silicone rubber compositions containing blends of vinyl containing organopolysiloxane gums and oils, MQ and MDQ resins, filler and a process aid are cured with a peroxide initiator. The compositions are formulated for increased tear strength and reduced compression set properties. While optical properties such as increased clarity and reduced haze are not properties which are discussed in Ward et al. Nevertheless, modified versions of one or more compositions disclosed therein are useful materials for use in a clear, heat curable silicone rubber of the present invention.

In the examples below, all the components were combined in a doughmixer for 4 hours at 160°C. Components (A), (C) and (E) (sometimes hereafter referred to as common components) were compounded with varying amounts of Components (D), (F), (G) and (H).

The common components include:
80 parts by weight of Component (A) comprising a vinyl chainstopped polydimethylsiloxane gum having 4,000 to 10,000 repeating units so as to result in a viscosity of about 13 million mPa.s (cps) at 25°C;
30 parts by weight of Component (C) comprising a finely divided silica filler having a surface area of about 240m²/gm; and
and 4 parts of Component (E) comprising a silanol stopped fluid having a viscosity between 3 and 30 mPa.s (cps) at 25°C.

### EXAMPLES 1-19

The common components were mixed with various proportions of the following components as follows:
0-10 parts based upon (A) of Component (B') comprising Component (B2) dispersed in xylene as defined above;
0-15 parts of Component (H) comprising a vinyl chain-stopped polydimethylsiloxane high viscosity oil having about 1,000 repeating units and a viscosity of about 60,000 mPa.s (cps) at 25°C;
0.6-1.8 parts of Component (G) comprising a polydimethylsiloxane polymethylhydrogensiloxane hydride random copolymer with about 100 repeating units;
0-.15 parts of composition (F) comprising a divinyl tetramethyl silazane; and
0-.1 parts water.

Tables 1A-1C list the resulting compositions and their corresponding properties.

**TABLE I - A**

| EXAMPLE | 1 | 2 | 3 | 4 | 5 |
|---|---|---|---|---|---|
| Component | | | | | |
| (Parts by weight) | | | | | |
| (B') (60 weight percent solids) | 5 | 10 | 0 | 10 | 5 |
| (H) | 7.5 | 0 | 0 | 15 | 7.5 |
| (G) | 1.2 | 1.8 | 1.8 | 1.8 | 1.2 |
| (F) | 0.075 | 0 | 0.15 | 0.15 | 0.075 |
| (H₂O) | 0.05 | 0.1 | 0.1 | 0.1 | 0.05 |

| Properties | | | | | |
|---|---|---|---|---|---|
| Clarity/Haze | 22.1 | 18.4 | 27.1 | 16.6 | 17.7 |
| Tear "B" | 173.0 | 206.0 | 224.0 | 185.0 | 183.0 |
| Tensile | 1827.0 | 1840.0 | 1812.0 | 1642.0 | 1656.0 |
| Elong. Percent | 925.0 | 965.0 | 958.0 | 807.0 | 933.0 |
| Hardness Shore A | 43.0 | 48.0 | 44.0 | 51.0 | 46.0 |
| Yellow Index | 6.3 | 6.8 | 7.2 | 7.7 | 6.9 |
| Transmit Percent | 87.6 | 87.8 | 85.1 | 86.1 | 86.1 |

**TABLE I - B**

| EXAMPLE | 6 | 7 | 8 | 9 | 10 |
|---|---|---|---|---|---|
| Component | | | | | |
| (Parts by Weight) | | | | | |
| (B') (60 weight percent solids) | 10 | 5 | 10 | 10 | 0 |
| (H) | 15 | 7.5 | 0 | 15 | 0 |
| (G) | 1.8 | 1.2 | 0.6 | 0.6 | 1.8 |
| (F) | 0 | 0.075 | 0 | 0 | 0 |
| (H₂O) | 0 | 0.05 | 0 | 0.1 | 0 |

| Properties | | | | | |
|---|---|---|---|---|---|
| Clarity/Haze | 16.3 | 17.0 | 19.8 | 17.6 | 18.6 |
| Tear "B" | 155.0 | 185.0 | 165.0 | 125.0 | 178.0 |
| Tensile | 1538.0 | 1704.0 | 1483.0 | 1273.0 | 1443.0 |
| Elong. PerCent | 910.0 | 936.0 | 814.0 | 762.0 | 1152.0 |
| Hardness Shore A | 46.0 | 44.0 | 47.0 | 45.0 | 35.0 |
| Yellow Index | 7.3 | 6.8 | 7.2 | 7.1 | 7.3 |
| Transmit PerCent | 86.5 | 86.7 | 86.1 | 86.4 | 86.5 |

**TABLE I - C**

| EXAMPLE | 11 | 12 | 13 | 14 | 15 |
|---|---|---|---|---|---|
| Component | | | | | |
| (Parts by Weight) | | | | | |
| (B') (60 weight percent solids) | 10 | 0 | 10 | 0 | 10 |
| (H) | 0 | 15 | 15 | 15 | 0 |
| (G) | 0.6 | 0.6 | 0.6 | 0.6 | 1.8 |
| (F) | 0.15 | 0.15 | 0.15 | 0 | 0.15 |
| (H₂O) | 0.1 | 0.1 | 0 | 0 | 0 |

| Properties | | | | | |
|---|---|---|---|---|---|
| Clarity/Haze | 13.3 | 15.1 | 15.8 | 28.4 | 13.9 |
| Tear "B" | 189.0 | 151.0 | 164.0 | 147.0 | 214.0 |
| Tensile | 1537.0 | 1692.0 | 1377.0 | 1297.0 | 1859.0 |
| Elong. PerCent | 667.0 | 865.0 | 661.0 | 971.0 | 840.0 |
| Hardness Shore A | 56.0 | 40.0 | 48.0 | 34.0 | 58.0 |
| Yellow Index | 7.7 | 8.3 | 9.0 | 9.2 | 6.3 |
| Transmit PerCent | 87.0 | 86.2 | 85.7 | 85.2 | 88.1 |

Test data were obtained from the following ASTM methods and procedures: Shore A - D-2240; Tensile, Elongation and modulus - D-412 (Die C); Tear - D-624 (Die B); and Compression Set - D-395 (method B).

**TABLE I - D**

| EXAMPLE | 16 | 17 | 18 | 19 |
|---|---|---|---|---|
| Component | | | | |
| (Parts by Weight) | | | | |
| (B') (60 weight percent solids) | 0 | 0 | 0 | 0 |
| (H) | 15 | 0 | 0 | 15 |
| (G) | 1.8 | 0.6 | 0.6 | 1.8 |
| (F) | 0.15 | 0 | 0.15 | 0 |
| (H₂O) | 0 | 0.1 | 0 | 0.1 |

| Properties | | | | |
|---|---|---|---|---|
| Clarity/Haze | 15.3 | 22.1 | 18.7 | 23.5 |
| Tear "B" | 164.0 | 179.0 | 206.0 | 136.0 |
| Tensile | 1746.0 | 1228.0 | 1727.0 | 1584.0 |
| Elong. PerCent | 954.0 | 975.0 | 898.0 | 1104.0 |
| Hardness Shore A | 41.0 | 36.0 | 43.0 | 30.0 |
| Yellow Index | 7.4 | 8.6 | 9.4 | 8.1 |
| Transmit PerCent | 85.9 | 85.1 | 85.2 | 84.5 |

In each of the Tables IA, IB, IC and ID the common components were combined with the various proportions of the components as noted to make up the individual examples.

All of the results for the properties are to the fourth decimal place.

**TABLE II**

| Composition | Haze % | Yellow Index | Trans % | Tear B pi | Shore A | Tensile PSI | Elong % |
|---|---|---|---|---|---|---|---|
| Resin (B') | - | - | + | | + | | - |
| (60 wt % solids) | | | | | | | |
| Vinyl Termi- | | | | - | - | - | |
| nated oil (H) | | | | | | | |
| Hydride (G) | | - | | + | | + | + |
| LVS (F) | - | - | | + | + | + | - |
| H₂O | | | | | | | |

| Interacting Compositions | | | | | | | |
|---|---|---|---|---|---|---|---|
| (G)/H₂O | S | S | | S | | | |
| (G)(F) | S | | | | | | |
| (B')/(G) | | | | S | | | |
| (B')/(H) | | | | | | S | |
| (B')/(F) | | | | | | S | |
| + Increases Number Value of Property | | | | | | | |
| - Reduces Number Value of Property | | | | | | | |
| S Significant effect | | | | | | | |
| (blank) no significant effect | | | | | | | |

Table II represents a tabulation of results observed when various properties were evaluated for EXAMPLES 1-19. The upper half of the table lists the five modifiers and their particular effect on the various properties. As set forth in the table, a plus sign (+) indicates that the particular modifier has a positive or increasing effect on the numerical value of the measured property and a minus sign (-) indicates that the modifier decreases the numerical value of the measured property. S indicates significant effects are measured; and a blank indicates no significant effects are measured. In accordance with the invention, it can be appreciated that the amount of resin, Component (B'), has a positive effect on transmission or clarity increasing the % transmission and decreasing both the haze and yellow index. Component (H) is normally used as a resin carrier and has no significant effect on the clarity but may suppress tear B, Shore A, and tensile strength. The hydride cross linking agent, Component (G) decreases yellowness and has a positive effect on strength. Likewise increasing amounts of linear vinyl silazane (F) decreases haze and yellowness, has a negative effect on elongation and has a positive effect on tear B, Shore and tensile strength. The water does not seem to have any significant effect on the properties directly.

The lower half of Table II illustrates the interactions between the components. It can be seen that the hydride, Component (G) and the water have significant interacting effects on haze, yellowness and tear B. Likewise the hydride and linear vinyl silazane (F) have a significant effect on haze. The resin (B') interacts with the hydride (G) to effect tear B and the resin (B') interacts with both the oil (G) and the linear vinyl silazane (F) to effect tensile strength.

Fig. 2 illustrates the interaction between the silazane (F) and the hydride (G). The plot illustrates that increasing amounts of the silazane decreases the haze and yellowness the most when the hydride is reduced.

Fig. 3 shows that haze is reduced and therefore clarity increases when the water content is high with a corresponding reduced hydride (G) content or with a reduced water content and increasing hydride content.

Fig. 4 graphically illustrates that yellowness is decreased with increasing hydride content. However, increasing the water content suppresses the advantageous reduction in yellowness.

Tables III-(A), (B) and (C) numerically illustrate the effects graphically illustrated in Figs. 2-4. When the hydride (G) and silazane (F) are compared, haze is reduced when the silazane content is High and the hydride content is Low, which is desirable in accordance with the present invention. Likewise when the water content is reduced in comparison to the hydride, haze is reduced (clarity is improved). Finally, the yellowness is reduced as the hydride content increases with decreasing water content, as illustrated on Table III-(C).

Minimum and maximum values for the various properties are also set forth in Tables III-(A),(B) and (C). However, from the foregoing it should be readily apparent that the most pronounced improvement in the clarity results by increasing the amount of resin the composition so as to best match the refractive indices of the gum (Component A) and the filler (Component C).

**TABLE III - (A)**

| Components | Haze |
|---|---|
| (F) - (G) | |
| Low - Low | 21.97 |
| High - Low | 15.72 |
| Low - High | 19.20 |
| High - High | 18.22 |
| Maximum | 28.40 |
| Minimum | 13.30 |

**TABLE III - (B)**

| Components | Haze |
|---|---|
| H₂O - (G) | |
| Low - Low | 20.67 |
| High - Low | 17.02 |
| Low - High | 16.02 |
| High - High | 21.40 |
| Maximum | 28.40 |
| Minimum | 13.30 |

**TABLE III - (C)**

| Components | Yellowness |
|---|---|
| (G) - H₂O | |
| Low - Low | 8.700 |
| High - Low | 7.075 |
| Low - High | 7.925 |
| High - High | 7.450 |
| Maximum | 9.400 |
| Minimum | 6.300 |

## Claims

1. A heat curable silicone rubber composition consisting of:
(A) 100 parts by weight of a vinyl containing organopolysiloxane having a viscosity of 3,000,000 to 100,000,000 mPa.s (cps) at 25°C;
(B) 1 to 30 parts by weight based upon Component (A) of an organopolysiloxane resin copolymer comprising:
1) R₃SiO_{1/2} units (M or M' units) and SiO₂ units (Q units) where each R is independently selected from the group consisting of vinyl radicals and monovalent hydrocarbon radicals free of aliphatic unsaturation with a ratio of M units to Q units ranging from 0.5:1 to 1.5:1, where the copolymer contains from 0.5 to 10 weight percent vinyl groups, or
2) R₃SiO_{1/2} units (M or M' units), SiO₂ units (Q units) and R₂SiO_{2/2} units (D or D' units) where each R is as defined above and where the ratio of M or M' units to Q units is from 0.5:1 to 1.5:1, and the D or D' units are present up to about 70 mol percent based upon the total number of mols of siloxy units in the copolymer, and where the resinous copolymer contains from 0.5 to 10.0 weight percent vinyl groups or
3) mixtures of 1 and 2;
(C) 5 to 200 parts by weight of a finely divided silica filler based upon Component (A);
(D) an organic peroxide free radical initiator or curing agent;
(E) up to 20 parts by weight of a low viscosity silanol stopped siloxane fluid of 3 to 500 mPa.s (cps) at 25°C based upon Component (A);
(F) up to 3 parts by weight of a divinyltetramethyl silazane fluid based upon 100 parts of Component (A);
(G) up to 2.5 parts by weight of a polydimethylsiloxane (PDMS) polymethylhydrogensiloxane (PMHS) random copolymer of about 100 repeating units each of PDMS and PMHS based upon Component (A); and
(H) up to 19 parts by weight of a polydiorganosiloxane fluid of 5,000 to 500,000 mPa.s (cps) at 25°C based upon Component (A).

2. The composition of claim 1, wherein said filler, Component (C), comprises fumed silica treated with up to 20 percent by weight of said filler of a cyclic methyl tetramer.

3. The composition of claim 1, comprising 20 to 75 parts by weight of Component (C) based upon Component (A).

4. The composition of claim 1, wherein Component (B2) is present in an amount of 1 to 7.5 parts by weight based upon Component (A).

5. The composition of claim 1, wherein Component (B) is dispersed in xylene and vacuum stripped so as to result in a composition comprising 60% by weight solids and 40 % by weight xylene.

6. The composition of claim 5, where residual xylene has been removed from the finished compound.

7. The composition of claim 1, wherein Component (B) has a Q content in an amount sufficient to result in compatibility between Components (A) and (C) so as to form an essentially one phase system of Components (A), (B) and (C).

8. The composition of claim 7, where compatibility is defined as a condition where the interface between the components in the composition is essentially invisible.

9. The composition of claim 1, having a transmission of at least 84%.

10. The composition of claim 1, having a yellow index less than 9.5%.

11. The composition of claim 1, having a yellow index of 6.3% to 9.5%.

12. The composition of claim 1, having a compression set of less than 25.5%.

13. The composition of claim 1, having a compression set of less than 20%.

14. The composition of claim 1, having a hardness of at least 30 on a Shore A scale.

15. The composition of claim 1, having a hardness of between 30 and 58 on a Shore A scale.

16. The composition of claim 1, having an elongation of at least 677%.

17. The composition of claim 1, having an elongation of between 650% and 1,150%.

18. The composition of claim 1, having a tensile strength of at least 8280 kPa (1,200 PSI).

19. The composition of claim 1, having a tensile strength of between 8280 kPa (1,200 PSI) and 12834 kPa (1,860 PSI).

20. The composition of claim 1, having a tear B of at least 2232 kg/m (125 pi).

21. The composition of claim 1, having a tear B of between 2232 to 4000 kg/m (125 to 224 pi).

22. The composition of claim 1, having a haze of less than 24%.

## Patentansprüche

1. Hitzehärtbare Siliconkautschuk-Zusammensetzung, bestehend aus:
(A) 100 Gewichtsteilen eines vinylhaltigen Polyorganosiloxans mit einer Viskosität von 3.000.000 bis 100.000.000 mPa.s (cps)
bei 25°C;
(B) 1 bis 30 Gewichtsteilen, bezogen auf Komponente (A), eines Polyorganosiloxanharz-Copolymers umfassend:
(1) R₃SiO_{1/2}-Einheiten (M- oder M'-Einheiten) und SiO₂-Einheiten (Q-Einheiten), worin jedes R unabhängig ausgewählt ist aus der Gruppe bestehend aus Vinylresten und einwertigen Kohlenwasserstoffresten ohne aliphatische Ungesättigtheit, wobei das Verhältnis der M-Einheiten zu den Q-Einheiten im Bereich von 0,5:1 bis 1,5:1 liegt, wobei das Copolymer von 0,5 bis 10 Gew.-% Vinylgruppen enthält, oder
2) R₃SiO_{1/2}-Einheiten (M- oder M'-Einheiten), SiO₂-Einheiten (Q-Einheiten) und R₂SiO_{2/2}-Einheiten (D- oder D'-Einheiten), worin jedes R die oben genannte Bedeutung hat und das Verhältnis der M- oder M'-Einheiten zu den Q-Einheiten von 0,5:1 bis 1,5:1 beträgt, und die D- oder D'-Einheiten bis zu etwa 70 Mol-%, bezogen auf die Gesamtzahl der Mole von Siloxy-Einheiten im Copolymer, vorhanden sind, und worin das harzartige Copolymer von 0,5 bis 10,0 Gew.-% Vinylgruppen enthält, oder
3) Mischungen von 1 und 2;
(C) 5 bis 200 Gewichtsteilen eines fein zerteilten Siliciumdioxid-Füllstoffes, bezogen auf Komponente (A);
(D) einem freie Radikale initiierenden, organischen Peroxid oder Härtungsmittel;
(E) bis zu 20 Gewichtsteilen einer Silanol-Endgruppen aufweisenden Siloxan-Flüssigkeit geringer Viskosität von 3 bis 500 mPa.s (cps) bei 25°C, bezogen auf Komponente (A);
(F) bis zu 3 Gewichtsteilen einer Divinyltetramethylsilazan-Flüssigkeit, bezogen auf 100 Gewichtsteile der Komponente (A);
(G) bis zu 2,5 Gewichtsteilen eines statistischen Polydimethylsiloxan(PDMS)-Polymethylhydrogensiloxan(PMHS)-Copolymers aus jeweils 100 wiederkehrenden Einheiten von PDMS und PMHS, bezogen auf Komponente (A), und
(H) bis zu 19 Gewichtsteilen einer Polydiorganosiloxan-Flüssigkeit von 5.000 bis 500.000 mPa.s (cps) bei 25°C, bezogen auf Komponente (A).

2. Zusammensetzung nach Anspruch 1, worin der Füllstoff, Komponente (C), pyrogenes Siliciumdioxid umfaßt, das mit bis zu 20 Gew.-% des Füllstoffes eines cyclischen Methyltetramers behandelt ist.

3. Zusammensetzung nach Anspruch 1, umfassend 20 bis 75 Gewichtsteile der Komponente (C), bezogen auf Komponente (A).

4. Zusammensetzung nach Anspruch 1, worin Komponente (B2) in einer Menge von 1 bis 7,5 Gewichtsteilen, bezogen auf Komponente (A), vorhanden ist.

5. Zusammensetzung nach Anspruch 1, worin Komponente (B) in Xylol dispergiert und vakuum-gestrippt ist, um eine Zusammensetzung zu ergeben, die 60 Gew.-% Feststoffe und 40 Gew.-% Xylol umfaßt.

6. Zusammensetzung nach Anspruch 5, worin das restliche Xylol aus der fertigen Masse entfernt worden ist.

7. Zusammensetzung nach Anspruch 1, worin Komponente (B) einen Q-Gehalt in einer genügenden Menge aufweist, um eine Verträglichkeit zwischen den Komponenten (A) und (C) zu ergeben, um ein im wesentlichen aus einer Phase bestehendes System der Komponenten (A), (B) und (C) zu bilden.

8. Zusammensetzung nach Anspruch 7, worin Verträglichkeit als ein Zustand definiert ist, bei dem die Grenzfläche zwischen den Komponenten in der Zusammensetzung im wesentlichen unsichtbar ist.

9. Zusammensetzung nach Anspruch 1 mit einer Durchlässigkeit von mindestens 84%.

10. Zusammensetzung nach Anspruch 1 mit einem Vergilbungsindex von weniger als 9,5%.

11. Zusammensetzung nach Anspruch 1 mit einem Vergilbungsindex von 6,3% bis 9,5%.

12. Zusammensetzung nach Anspruch 1 mit einer bleibenden Verformung von weniger als 25,5%.

13. Zusammensetzung nach Anspruch 1 mit einer bleibenden Verformung von 20%.

14. Zusammensetzung nach Anspruch 1 mit einer Härte von mindestens 30 auf einer Shore A-Skala.

15. Zusammensetzung nach Anspruch 1 mit einer Härte zwischen 30 und 58 auf einer Shore A-Skala.

16. Zusammensetzung nach Anspruch 1 mit einer Dehnung von mindestens 677%.

17. Zusammensetzung nach Anspruch 1 mit einer Dehnung zwischen 650% und 1.150%.

18. Zusammensetzung nach Anspruch 1 mit einer Zugfestigkeit von mindestens 8.280 kPa (1.200 psi).

19. Zusammensetzung nach Anspruch 1 mit einer Zugfestigkeit zwischen 8.250 kPa (1.200 psi) und 12.834 kPa (1.860 psi).

20. Zusammensetzung nach Anspruch 1 mit einer Reißfestigkeit B von mindestens 2.232 kg/m (125 pi).

21. Zusammensetzung nach Anspruch 1 mit einer Reißfestigkeit B zwischen 2.232 bis 4.000 kg/m (125 bis 224 pi).

22. Zusammensetzung nach Anspruch 1 mit einer Trübung von weniger als 24%.

## Revendications

1. Composition élastomère thermodurcissable à base de silicone constituée de
(A) 100 parties en poids d'un organopolysiloxane à groupes vinyle ayant une viscosité à 25 °C comprise dans l'intervalle allant de 3 000 000 à 100 000 000 mPa.s (centipoises);
(B) de 1 à 30 parties en poids, par rapport au composant (A), d'une résine copolymère de type organopolysiloxane comprenant :
1) des motifs R₃SiO_{1/2} (motifs M ou M') et des motifs SiO₂ (motifs Q) dans lesquels chaque R est choisi indépendamment dans le groupe formé par les radicaux vinyle et les radicaux hydrocarbonés monovalents exempts d'insaturations aliphatiques, le rapport de motifs M aux motifs Q étant compris entre 0,5/1 et 1,5/1, le copolymère contenant de 0.5 à 10 % en poids de groupes vinyle, ou
2) des motifs R₃SiO_{1/2} (motifs M ou M'), des motifs SiO₂ (motifs Q) et des motifs R₂SiO_{2/2} (motifs D ou D') où R est défini comme ci-dessus et où le rapport de motifs M ou M' aux motifs Q est compris entre 0.5/1 et 1,5/1, et les motifs D ou D' sont présents en une quantité allant jusqu'à environ 70 % en moles par rapport au nombre total de moles de motifs siloxy dans le copolymère, le copolymère résineux contenant entre 0,5 et 10,0 % en poids de groupes vinyle, ou
3) des mélanges de 1 et 2;
(C) de 5 à 200 parties en poids, par rapport au composant (A), d'une charge de type silice finement divisée;
(D) un agent de durcissement ou amorceur radicalaire de type peroxyde organique;
(E) jusqu'à 20 parties en poids, par rapport au composant (A), d'un fluide siloxane à terminaisons silanol ayant une faible viscosité comprise entre 3 et 500 mPa.s (cps) à 25 °C;
(F) jusqu'à 3 parties en poids, par rapport à 100 parties de composant (A), d'un fluide divinyltétraméthylsilazane;
(G) jusqu'à 2,5 parties en poids, par rapport au composant (A), d'un copolymère statistique polydiméthylsiloxane (PDMS)-polyméthylhydrogénosiloxane (PMHS) comportant environ 100 motifs répétititfs de chacun des comonomères constituant le PDMS et PMHS,
(H) jusqu'à 19 parties en poids, par rapport au composant (A), d'un fluide polydiorganosiloxane ayant une viscosité à 25 °C de 5000 à 500 000 mPa.s (cps).

2. Composition selon la revendication 1 dans laquelle ladite charge, le composant (C), comprend de la silice fumée traitée avec jusqu'à 20 % en poids par rapport à ladite charge, d'un tétramère méthyle cyclique.

3. Composition selon la revendication 1, comprenant de 20 à 75 parties en poids, par rapport au composant (A), de composant (C).

4. Composition selon la revendication 1 dans laquelle le composant (B2) est présent à raison de 1 à 7,5 parties en poids par rapport au composant (A).

5. Composition selon la revendication 1 dans laquelle le composant (B) est dispersé dans du xylène et est évaporé sous vide de manière à obtenir une composition comprenant 60 % en poids de matières solides et 40 % en poids de xylène.

6. Composition selon la revendication 5 dans laquelle le xylène résiduel a été éliminé du mélange final.

7. Composition selon la revendication 1 dans laquelle le composant (B) a une teneur en motifs Q suffisante pour que les composants (A) et (C) soient compatibles de manière à former un système dans lequel les composants (A), (B) et (C) ne forment essentiellement qu'une seule phase.

8. Composition selon la revendication 7 dans laquelle la compatibilité est définie comme un état dans lequel l'interface entre les composants dans la composition est pratiquement invisible.

9. Composition selon la revendication 1, ayant une transmission au moins égale à 84 %.

10. Composition selon la revendication 1 ayant un indice de jaune inférieur à 9,5 %.

11. Composition selon la revendication 1 ayant un indice de jaune compris entre 6,3 % et 9,5 %.

12. Composition selon la revendication 1 ayant une déformation permanente inférieure à 25,5 %.

13. Composition selon la revendication 1 ayant une déformation permanente inférieure à 20 %.

14. Composition selon la revendication 1 ayant une dureté Shore A au moins égale à 30.

15. Composition selon la revendication 1 ayant une dureté Shore A comprise entre 30 et 58.

16. Composition selon la revendication 1 ayant un allongement à la rupture au moins égal à 677 %.

17. Composition selon la revendication 1 ayant un allongement à la rupture compris entre 650 et 1150 %.

18. Composition selon la revendication 1 ayant une résistance à la rupture en traction au moins égale à 8280 kPa (1 200 livres par pouce au carré).

19. Composition selon la revendication 1 ayant une résistance à la rupture en traction comprise entre 8280 kPa (1200 livres par pouce au carré) et 12834 kPa (1860 livres par pouce au carré).

20. Composition selon la revendication 1 ayant une résistance au déchirement (matrice B) au moins égale à 2232 kg/m (125 livres par pouce).

21. Composition selon la revendication 1 ayant une résistance au déchirement (matrice B) comprise entre 2232 et 4000 kg/m (125 à 224 livres par pouce).

22. Composition selon la revendication 1 ayant un trouble inférieur à 24 %.
